# EUROPEAN PATENT APPLICATION

(11) **EP 1 990 521 A1**
(43) Date of publication of application: **12.11.2008**
(21) Application number: 07009341.4
(22) Date of filing: 09.05.2007
(51) Int. Cl.: F02C 9/34, F02C 7/228, F23R 3/34

(54) **Pressure dynamics reduction within a gas turbine engine**

(71) Applicant: SIEMENS AKTIENGESELLSCHAFT, 80333 München (DE)
(72) Inventor: Bulat, Ghenadie, Coddington NG24 2TB Newark Notts (GB); Donceva, Diana, LN5 7JZ Lincoln (GB)

(57) **Abstract**

A method for pressure dynamics reduction within a gas turbine engine with a number of combustion chambers (1), where a pilot fuel spilt is defined for each combustion chamber, is provided, comprising the steps of measuring the pressure values in each combustion chamber in time steps (21), determining the pressure change rates in the combustion chambers from the measured pressure values, and reducing the pilot fuel split to a particular combustion chamber to zero (26) in case that the pressure change rate in this combustion chamber increases over two or more consecutive time steps (23) and exceeds the pressure change rate in all other combustion chambers (25) and the pressure change rate in this combustion chamber is above a maximum allowable pressure change limit (24).

## Description

The present invention relates to a reduction of high pressure fluctuation (pressure dynamics) within a combustion chamber of a gas turbine.

Most gas turbines experience at different loads high levels of pressure dynamics which may cause structural damage to its components. Especially high pressure dynamics within the combustion chamber is undesirable.

Pressure fluctuation may be caused by various parameters, for example air to fuel ratio, flame temperature, swirl angle or mainstream velocity. Generally, a gas turbine is equipped with an Engine Control Unit (ECU) to protect the engine from running at unfavourable operating conditions such as elevated temperatures, overspeed, elevated pressure dynamics or high vibrations. When one combustion chamber of the gas turbine shows levels of pressure dynamics above an allowable limit, the Engine Control Unit shuts down the engine. As a result, the power outage is affected. Moreover, the life span of the hot components can be affected by the stop/start cycles. Therefore, the engine is operated in an operational window that avoids the pressure dynamics. However, at some off-design operating points or transient loads (run up or run down) high pressure dynamics could be experienced. Currently, the Engine Control Unit is not configured to avoid the problem.

A combustion chamber in a gas turbine usually receives fuel via multiple separate inlets. In case of two inlets, they are named as main fuel inlet and pilot fuel inlet. Typically the pilot fuel flow is used to stabilise the flame and to reduce pressure dynamics.

It is an objective of the present invention to provide an improved method for pressure dynamics reduction within a gas turbine. It is further an objective of the present invention to provide an advantageous gas turbine engine.

These objectives are solved by a method for pressure dynamics reduction within a gas turbine engine as claimed in claim 1 and a gas turbine engine as claimed in claim 10. The depending claims define further developments of the invention.

The inventive method for pressure dynamics reduction within a gas turbine engine with a number of combustion chambers where a pilot fuel split is defined for each combustion chamber comprises the following steps: The pressure values in each combustion chamber are measured in time steps. From the measured pressure values the pressure change rates in the combustion chambers are determined. In case that the pressure change rate in a particular combustion chamber increases over two or more consecutive time steps and exceeds the pressure change rate in all other combustion chambers and the pressure change rate in this combustion chamber is above a maximum allowable pressure change limit, the pilot fuel split to this particular combustion chamber is reduced to zero.

Preferably the total amount of fuel that is delivered to the combustion chamber, the pilot fuel flow of which is reduced to zero, is kept constant.

For continuous pressure dynamics control it is advantageous to repeat the described method. This means, that measuring the pressure values, determining the pressure change rates and, if necessary, reducing the pilot fuel split to a particular combustion chamber to zero is repeated.

Further, if the pressure change stays below the allowable pressure change limit, then the zero pilot fuel split in a combustion chamber can be maintained until a load change occurs. The pilot fuel split can be increased to its nominal value when a load change of the gas turbine engine takes place.

In case that the number of combustion chambers for which the pilot fuel split has been reduced to zero exceeds a pre-given number and at least one further combustion chamber fulfils the mentioned criteria for a reduction of the pilot fuel split to zero, then the pilot fuel split for one of the other affected combustion chambers can be increased again to a fraction of its nominal value. Concretely, the pilot fuel split for one of the combustion chambers for which the pilot fuel split has been reduced to zero can be increased again to a fraction of its nominal value if the number of combustion chambers for which the pilot fuel split has been reduced to zero exceeds a pre-given number, if there is still at least one combustion chamber the pressure change rate of which increases over two or more consecutive time steps and exceeds the pressure change rate in all other combustion chambers and the pressure change rate of which is above a maximum allowable pressure change limit.

From all combustion chambers having their pilot fuel split reduced to zero the one combustion chamber may be chosen to increase its pilot fuel split to a fraction of the nominal pilot fuel split, the rate of pressure change of which does not exceed the rate of pressure change in all other combustors and the pressure signal of which does not exceed the allowable pressure change limit for the longest time.

The mentioned fraction of the nominal pilot fuel split can be for instance 50%, but also another meaningful fraction. Further, the pilot fuel split for one of the combustion chambers for which the pilot fuel split has been reduced to zero can be increased again to a fraction of the nominal pilot fuel split if the number of combustion chambers for which the pilot fuel split has been reduced to zero exceeds three quarters of the total number of combustion chambers.

An inventive gas turbine engine is equipped with a number of combustion chambers, an adjustable main valve, an adjustable pilot valve, a control unit and a control module. Each combustion chamber is equipped with at least one pressure sensor connected to the control unit. Further, each combustion chamber comprises a main fuel inlet and a pilot fuel inlet. The adjustable main valve is associated to the main fuel inlet and the adjustable pilot valve is associated to the pilot fuel inlet. The adjustable main valve and pilot valve may preferably be fast responding valves.

The control module is connected to the pressure sensors of the combustion chambers for receiving pressure signals. Moreover, the control module is connected to the pilot valves of the combustion chambers for delivering valve setting signals. The control unit is designed to determine pressure change rates from the pressure signals and to compare the pressure change rates of each of the combustion chambers with at least one previous value of pressure change rate in the same combustion chamber, with the pressure change rates of all other combustion chambers and with a maximum allowable pressure change limit.

The control unit is further designed to produce and deliver a valve setting signal for closing the adjustable pilot valve at the pilot fuel inlet of a particular combustion chamber if the pressure change rate in this combustion chamber increases and exceeds the pressure change rate in all other combustion chambers over two or more consecutive time steps and the pressure change rate in this combustion chamber is above the maximum allowable pressure change limit.

Moreover the control unit can be designed to produce and deliver a valve setting signal for adjusting the valve setting to the adjustable main valve associated to the main fuel inlet of the particular combustion chamber so as to keep the total amount of fuel delivered to this combustion chamber constant when the pilot valve is closed.

It is an advantage of the present invention that by rapid reduction of the pilot fuel split pressure change rates which require a shutdown of the gas turbine engine will be avoided. Thus, the system will operate in a stable region with acceptable levels of dynamics. This protects the components of the gas turbine and hence extends the life time of the gas turbine components, especially of the combustion chambers.

Further features, properties and advantages of the present invention will become clear from the following description of embodiments in conjunction with the accompanying drawings.

Fig. 1 schematically shows a part of a combustion chamber in a sectional view.

Fig. 2 schematically shows the fuel split and distribution in a gas turbine.

Fig. 3 shows randomly generated pressure change rates of three combustion chambers over time in arbitrary units.

Fig. 4 shows the flow chart of the decision making process in the inventive method.

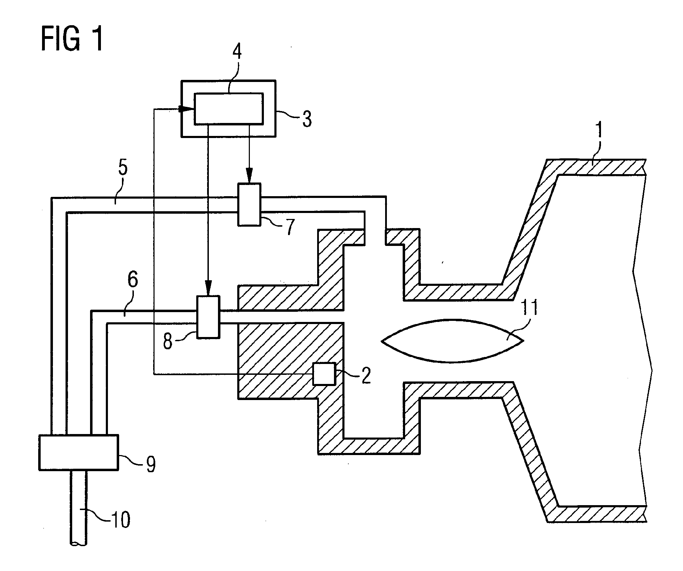

In the following a first embodiment of the inventive method will be described with reference to Figures 1 to 4. The present embodiment relates as an example to a gas turbine comprising three combustion chambers. Instead of three combustion chambers the gas turbine can also comprise each number of combustion chambers.

Figure 1 schematically shows a part of a combustion chamber 1 of an inventive gas turbine in a sectional view. The combustion chamber comprises a pressure sensor 2 for measuring the pressure inside the chamber. It can also comprise more than one pressure sensor, e.g. for measuring the pressure at different locations of the combustion chamber. Further, the combustion chamber 1 comprises two fuel inlets, a main fuel inlet 5 and a pilot fuel inlet 6. The main fuel inlet is equipped with an adjustable main valve 7 and the pilot valve is equipped with an adjustable pilot valve 8, also called primary valve.

The fuel is directed to the combustion chamber 1 through an engine fuel supply 10. The engine fuel supply 10 is connected to an engine fuel split valve 9. The engine fuel split valve 9 is further connected to the main fuel inlet 5 and the pilot fuel inlet 6. The fuel incoming through the engine fuel supply 10 enters the engine fuel split valve 9. The engine fuel split valve 9 splits the fuel flow into a main fuel split and a pilot fuel split. The main fuel split is directed to the combustion chamber 1 through the main fuel inlet 5 and the pilot fuel split is directed to the combustion chamber through the pilot fuel inlet 6. Alternatively the combustion chamber can have more than two fuel inlets. The fuel entering the combustion chamber 1 feeds a flame 11 which is located inside the combustion chamber 1.

Figure 1 further shows a control unit 3 comprising a control module 4. The control module 4 is connected to the pressure sensor 2, to the adjustable pilot valve 8 and to the adjustable main valve 7. The pressure sensor 2 measures pressure values inside the combustion chamber 1 in time steps. The control module 4 receives pressure signals from the pressure sensor 2. Further, the control module 4 delivers valve setting signals to the pilot valve 8 and to the main valve 7.

The gas turbine which is described in the present embodiment comprises three combustion chambers. The pressure sensors 2 and the adjustable pilot valves 8 and main valves 7 of all three chambers 1 are connected to the same control unit 3 which comprises separate control modules 4 for each combustion chamber and a comparator for comparing the pressure signals coming from the pressure sensors 2. This allows it to compare the pressure signals of the different chambers with each other.

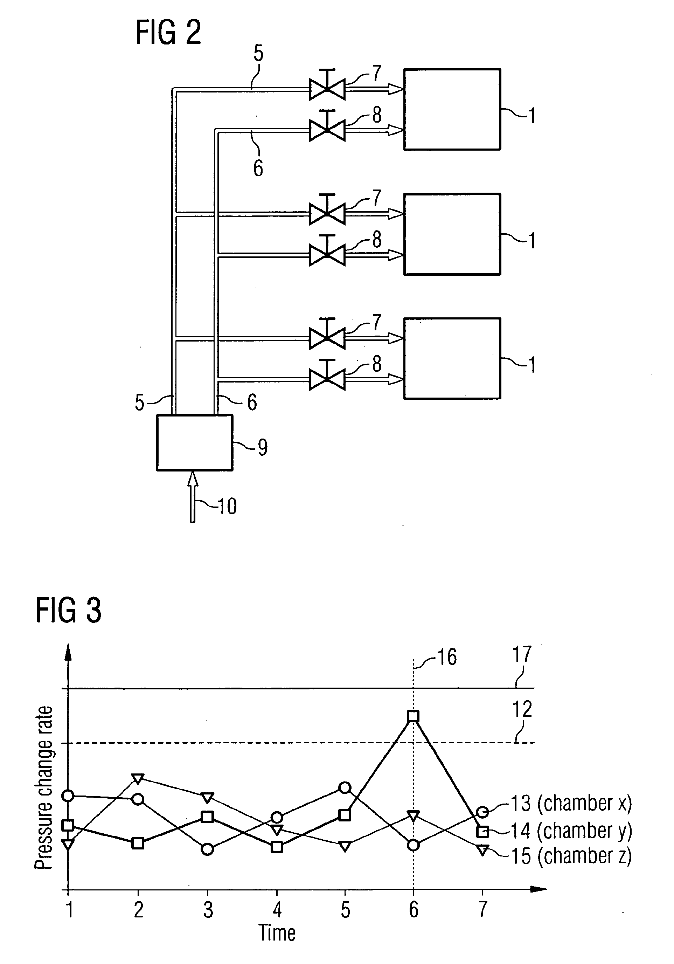

Also the fuel inlets of the different combustion chambers 2 are connected to each other. This is sketched in Figure 2. Figure 2 schematically shows the fuel split and distribution in a gas turbine with three combustion chambers 1. Of course, the gas turbine may have less or preferably more combustion chambers, e.g. 6, 8 or 12 combustion chambers. Each combustion chamber is equipped with two fuel inlets, namely a main fuel inlet 5 and a pilot fuel inlet 6. Moreover, in Figure 2 one can see the engine fuel supply 10 which leads to the engine fuel split valve 9. One can further see in Figure 2 the main fuel inlet 5 and the pilot fuel inlet 6 each connected to the engine fuel split valve 9. The pilot fuel inlet 6 has three branches each directed to one of the combustion chambers 1. These three branches are equipped with adjustable primary valves 8. Also the main fuel inlet 5 has three branches each directed to one of the combustion chambers 1 and equipped with adjustable main valves 7.

Preferably the adjustable valves 7 and 8 are fast responding valves which are mounted as close as possible to the respective combustion chamber. Normally, main and primary valves will be set to a default position, for instance fully open for the primary valve 8 and partially open for the main valve 7. The fuel split will be controlled by the engine fuel supply valve 9. Only in the case of high pressure dynamics the primary and main valves will be activated by the control modules 4.

The pressure values of all combustion chambers which are measured by the pressure sensors 2 are now compared by the control unit 3 with each other, with previously measured values and with allowable limits. Figure 3 shows randomly generated exemplary pressure change rates of the three combustion chambers via time steps in arbitrary units. The pressure change rate is the difference between two consecutive pressure values.

The full line 17 in Figure 3 indicates the shutdown limit. If a combustion chamber exceeds the shutdown limit the gas turbine engine is shut down to prevent it from damage. Further, the dashed line 12 shows a pre-given maximum allowable pressure change limit. The maximum allowable pressure change limit 12 is set to a value below the shutdown limit 17. The circles 13 represent the pressure change rate in a combustion chamber x at a particular time, the squares 14 represent the pressure change rate in a combustion chamber y at a particular time and the triangles 15 represent the pressure change rate in a combustion chamber z at a particular time. Moreover, the dotted line 16 indicates the time when the pilot flow in combustion chamber y was reduced to zero. For a better identification of the pressure change rate values corresponding to the different combustion chambers the circles 13, squares 14 and triangles 15 respectively are connected by lines.

One can see in Figure 3 the following characteristics of the pressure change rate in chamber x, as indicated by line 13. From the second to the third time step the pressure change rate decreases. Then it increases from the third to the fourth and from the fourth to the fifth time step. At the fifth time step the pressure change rate exceeds the pressure change rate in all other combustion chambers, namely in chamber y and z, but it does not reach the maximum allowable pressure change limit 12. From the fifth to the sixth time step the pressure change rate decreases again.

In contrast, the pressure change rate in chamber y, as indicated by line 14, decreases from the third to the fourth time step, but it increases from the fourth to the fifth and from the fifth to the sixth time step. At the sixth time step the pressure change rate in chamber y exceeds the pressure change rate in all other combustion chambers, namely in chamber x and z, and it is above the maximum allowable pressure change limit 12. Then the pilot flow in chamber y is rapidly reduced to zero as indicated by the dotted line 16. This causes a decrease of the pressure change rate in chamber y below the maximum allowable pressure change limit 12 from the sixth to the seventh time step.

The pressure change rate in chamber z, indicated by line 15, shows the following behaviour. It does not increase over two or more consecutive time steps and it does not exceed the maximum allowable pressure change limit 12. One can see from Figure 3 that the reduction of the pilot fuel flow to zero in chamber y prevents the shut down of this and also of the other combustion chambers due to high pressure change rates.

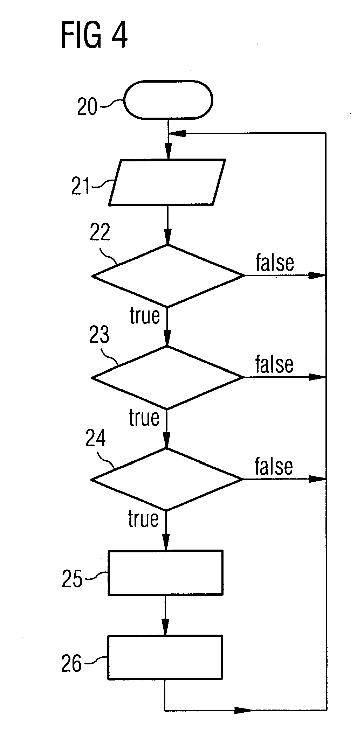

The inventive method will now be described in detail with reference to Figure 4. Figure 4 shows the flow chart of the decision making process, which takes place for instance in the control unit 3 (see Figure 1). The process of pressure dynamics reduction starts by activating a start control button 20, for example. Then step 21 is activated in which the pressure values of each combustion chamber 1, which are measured in time steps, are red. In the following step 22 consecutive readings of each chamber 1 are compared and the pressure change rate is determined in time steps (see Figure 3).

If any pressure value has been changed over two consecutive time steps, then step 23 is activated. If no pressure value has been changed over two consecutive time steps, then the process returns to step 21.

In step 23 the pressure change rates of each combustion chamber are compared with the preceding pressure change rates of the respective combustion chamber. The pressure change rate defines the difference between two pressure values of a particular combustion chamber measured in two consecutive time steps. If the pressure change rate has increased over two consecutive time steps, then step 24 is activated. This is illustrated in Figure 3 for example for chamber x (line 13) from the third to the fifth time step and for chamber y (line 14) from the fourth to the sixth time step. If the pressure change rate has not increased over two consecutive time steps, then the process returns to step 21.

In step 24 the pressure change rate is compared with a pre-given maximum allowable pressure change limit 12. The maximum allowable pressure change 12 limit is set to a value below and not too close to the shutdown limit 17. If the pressure change rate exceeds the maximum allowable pressure change limit 12, then step 25 is activated. This is the case in the example of Figure 3 for chamber y at the sixth time step. If the pressure change rate does not exceed the maximum allowable pressure change limit 12, then the process returns to step 21. This is the case in the example of Figure 3 for chamber x (line 13) at the fifth time step.

In step 25 the combustion chamber with the highest pressure change rate is identified and then step 26 is activated. This means in the example of Figure 3 that at the sixth time step chamber y is identified as combustion chamber with the highest pressure change rate and step 26 is activated for this chamber.

In step 26 the pilot fuel flow to the chamber with the highest pressure change rate, which was identified in step 25, is rapidly reduced to zero and the main fuel flow to this chamber is modified. In the example of Figure 3 the control unit 3 delivers a signal to the control module 4 of combustion chamber y. The control module 4 closes the pilot valve 8 and simultaneously modifies the main valve 7 of chamber y so that the overall fuel supply is constant. The engine fuel split valve 9 will not be adapted. The result is a reduction of the pressure change rate in chamber y (line 14) from the sixth to the seventh time step. As a consequence, the pressure change rate in this chamber falls to a value below the maximum allowable pressure change limit 12. After finishing step 26 the process returns to step 21.

If the pressure change rate of chamber y remains reduced at the same operating point where it was initially altered, then the zero pilot fuel flow will be maintained until the load changes. If, however, the pressure change rate of chamber y remains reduced and the operating point changes, for example by a transient load, then the pilot fuel split will be adjusted to the nominal value for the corresponding load.

In the following a second embodiment of the inventive method will be described in relation to the first embodiment. Now a gas turbine as it was described in the first embodiment but with more than three combustion chambers is considered. After the reduction of the pilot fuel flow of one combustion chamber other combustion chambers also show pressure change rates above the maximum allowable pressure change limit 12. In such cases the control unit 3 identifies the second combustion chamber with high pressure dynamics and will reduce the pilot fuel flow to zero and will modify main fuel, as it was described with respect to the first chamber (chamber y in the first embodiment). Similarly, further combustion chambers could have the pilot fuel flow reduced to zero.

If more than, for instance, three quarters of the total number of combustion chambers are operating with zero pilot flow and other chambers exhibit pressure change rates above the maximum allowable pressure change limit 12, the following will apply. The combustion chamber which operates the longest time with zero pilot fuel flow will be identified. The pilot fuel flow of this identified chamber will be incremented to, for instance, 50% of the nominal value. In this way the symmetry between combustion chambers will be broken and therefore the possibility of having repeated high pressure fluctuations will be reduced to a minimum.

By the described reduction of the pilot fuel split the region of the shutdown limit will be avoided and the system will operate in a stable region with acceptable levels of dynamics.

## Claims

1. A method for pressure dynamics reduction within a gas turbine engine with a number of combustion chambers (1) where a pilot fuel split is defined for each combustion chamber, comprising the steps of:
measuring the pressure values in each combustion chamber (1) in time steps (21), determining the pressure change rates in the combustion chambers (1) from the measured pressure values, and reducing the pilot fuel split to a particular combustion chamber to zero (26) in case that the pressure change rate in this combustion chamber increases over two or more consecutive time steps (23) and exceeds the pressure change rate in all other combustion chambers (25) and the pressure change rate in this combustion chamber is above a maximum allowable pressure change limit (24).

2. The method, as claimed in claim 1,
wherein
the total amount of fuel that is delivered to the combustion chamber (1) the pilot fuel flow of which is reduced to zero is kept constant.

3. The method, as claimed in claim 1 or 2,
wherein
measuring the pressure values, determining the pressure change rates and reducing the pilot fuel split to a particular combustion chamber to zero in case that the pressure change rate in this combustion chamber increases over two or more consecutive time steps (23) and exceeds the pressure change rate in all other combustion chambers (25) and the pressure change rate in this combustion chamber is above a maximum allowable pressure change limit (24) is repeated.

4. The method, as claimed in any of the claims 1 to 3,
wherein
zero pilot fuel split in a combustion chamber is maintained until a load change occurs if the pressure change stays below the allowable pressure change limit.

5. The method, as claimed claim 4,
wherein
the pilot fuel split is increased to its nominal value when a load change of the gas turbine engine takes place.

6. The method, as claimed in any of the claims 1 to 5,
wherein
the pilot fuel split for one of the combustion chambers (1) for which the pilot fuel split has been reduced to zero (26) is increased again to a fraction of its nominal value if the number of combustion chambers (1) for which the pilot fuel split has been reduced to zero exceeds a pre-given number, if there is still at least one combustion chamber the pressure change rate of which increases over two or more consecutive time steps (23) and exceeds the pressure change rate in all other combustion chambers (25) and the pressure change rate of which is above a maximum allowable pressure change limit (24).

7. The method as claimed in claim 6,
wherein
as the combustion chamber (1) the pilot fuel split of which is increased to a fraction of the nominal pilot fuel split the one combustion chamber of all combustion chambers having their pilot fuel split reduced to zero is chosen the rate of pressure change of which does not exceed the rate of pressure change in all other combustors and the pressure signal of which does not exceed the allowable pressure change limit for the longest time.

8. The method as claimed in claim 6 or claim 7,
wherein
the fraction of the nominal pilot fuel split is 50%.

9. The method, as claimed in any of the claims 6 to 8,
**characterised in that**
the pilot fuel split for one of the combustion chambers (1) for which the pilot fuel split has been reduced to zero is increased again to a fraction of the nominal pilot fuel split if the number of combustion chambers for which the pilot fuel split has been reduced to zero exceeds three quarters of the total number of combustion chambers.

10. A gas turbine engine equipped with
- a number of combustion chambers (1), each combustion chamber being equipped with at least one pressure sensor (2) connected to a control unit (3) and comprising a main fuel inlet (5) and a pilot fuel inlet (6),
- an adjustable main valve (7) associated to the main fuel inlet (5)
- an adjustable pilot valve (8) associated to the pilot fuel inlet (6)
- a control module (4) connected to the pressure sensors (2) of the combustion chambers (1) for receiving pressure signals and to the pilot valves (8) for delivering valve setting signals,
- the control unit (3) being designed to determine pressure change rates from the pressure signals and to compare the pressure change rates of each of the combustion chambers (1) with at least one previous value of pressure change rate in the same combustion chamber (1), with the pressure change rates of all other combustion chambers (1) and with a maximum allowable pressure change limit,
- the control unit (3) being further designed to produce and deliver a valve setting signal for closing the adjustable pilot valve (8) at the pilot fuel inlet (6) of a particular combustion chamber (1) if the pressure change rate in this combustion chamber (1) increases and exceeds the pressure change rate in all other combustion chambers (1) over two or more consecutive time steps and the pressure change rate in this combustion chamber (1) is above the maximum allowable pressure change limit.

11. The gas turbine engine as claimed in claim 11,
in which
the control unit (3) is further designed to produce and deliver a valve setting signal for adjusting the valve setting to the adjustable main valve (7) associated to the main fuel inlet (5) of the particular combustion chamber (1) so as to keep the total amount of fuel delivered to this combustion chamber (1) constant when the pilot valve (8) is closed.
